# FASCICULE DE BREVET EUROPEEN

(11) **EP 0 990 871 B1**
(45) Date de publication et mention de la délivrance du brevet: **07.01.2004**
(21) Numéro de dépôt: 99402354.7
(22) Date de dépôt: 27.09.1999
(51) Int. Cl.: G01B 21/32, G01B 7/16

(54) **Procédé de surveillance de l'état d'une structure composite et réservoir de fluide sous pression doté d'un dispositif mettant en oeuvre ce procédé**
Verfahren zur Überwachung einer Struktur aus Verbundmaterial und Druckbehälter mit einer Vorrichtung zur Anwendung des Verfahrens
Composite structure state surveillance method and pressurized fluid container equiped with a device using this method

(30) Priorité: 29.09.1998 FR 9812147
(43) Date de publication de la demande: 05.04.2000
(73) Titulaire: AEROSPATIALE MATRA, 75781 Paris Cédex 16 (FR)
(72) Inventeur: Louis-Calixte, Bruno, 18000 Bourges (FR); Souvannavong, Frédéric, 18000 Bourges (FR); Angoulvant, Manuel, 18220 Sainte Solange (FR)
(74) Mandataire: Ilgart, Jean-Christophe

(56) Documents cités:
- EP-A- 0 235 400
- EP-A- 0 546 899

## Description

### Domaine technique

L'invention concerne principalement un procédé conçu pour permettre la surveillance de l'état de fonctionnement d'une structure composite formée d'au moins deux matériaux différents superposés, lorsque la structure est soumise à un effort uniforme dû, par exemple, à une pression appliquée sur toute sa surface.

L'invention concerne également une application privilégiée de ce procédé à la surveillance de l'état de fonctionnement de la paroi d'un réservoir destiné à contenir un fluide sous pression (par exemple, jusqu'à 500 bars).

### Etat de la technique

Lorsqu'un réservoir est destiné à contenir un fluide sous pression, on réalise sa paroi de façon qu'elle soit apte à supporter la pression interne exercée par le fluide.

Lorsque cette contrainte de résistance mécanique se double d'une exigence de relative légèreté du réservoir, une solution avantageuse consiste à réaliser la paroi du réservoir en deux matériaux différents superposés. Plus précisément, une enveloppe métallique, organique ou composite est revêtue extérieurement d'un renfort de fibres longues noyées dans une matrice de résine ou métallique. Le renfort peut notamment être obtenu par enroulement filamentaire, suivi d'un cycle de polymérisation. Les fibres peuvent être bobinées sous la forme d'une simple frette ou de façon multidirectionnelle.

Lorsque la paroi d'un réservoir contenant un fluide sous pression est constituée par une telle structure, celle-ci peut s'endommager au cours du temps, ce qui représente alors un risque pour la sécurité. En particulier, la tenue mécanique du renfort composite peut diminuer au cours du temps, sous l'effet de l'utilisation du réservoir ou d'agressions extérieures.

On connaît notamment des documents EP-A-0 546 899 et FR-A-2 688 584 des techniques permettant de surveiller l'état d'endommagement intrinsèque d'une structure composite. Ces techniques concernent plus précisément la détection d'éventuels défauts de délaminage entre les nappes d'une structure composite formée de nappes superposées de fibres noyées dans une matrice de résine. Une fibre optique continue à maintien de polarisation, jouant le rôle d'un réseau de capteurs, est placée soit entre deux nappes de la structure composite, soit entre la structure proprement dite et un profilé associé.

Cette technique de surveillance par fibre optique est lourde à mettre en oeuvre puisqu'elle repose sur l'utilisation d'une installation optique extérieure. La surveillance est donc discontinue et nécessite une immobilisation périodique de la structure concernée.

Une telle technique de surveillance est donc inadaptée lorsqu'on désire pouvoir connaître en temps réel l'état d'endommagement d'une structure composite, sans nécessiter l'immobilisation de celle-ci.

### Exposé de l'invention

L'invention a précisément pour objet un procédé de surveillance de l'état de fonctionnement d'une structure composite soumise à un effort uniforme dû, par exemple, à une pression appliquée, sur toute sa surface, conçu de façon à assurer une surveillance en temps réel, sans qu'il soit impérativement nécessaire d'immobiliser la structure.

Conformément à l'invention, ce résultat est obtenu au moyen d'un procédé de surveillance de l'état d'une structure composite formée d'au moins deux matériaux différents superposés selon une interface donnée et soumise à un effort uniforme sur toute sa surface, comprenant les étapes suivantes :
- mesure d'une déformation ou d'un niveau de contrainte de la structure engendrée par ledit effort, à l'interface ;
- comparaison de la déformation ou du niveau de contrainte mesuré avec une grandeur de référence (soit une déformation, un niveau de pression ou de contrainte) de la structure, normalement engendrée par ledit effort.

Dans un mode de réalisation préféré de l'invention, on détermine la grandeur de référence en mesurant la déformation ou le niveau de contrainte d'une partie de la structure, formée d'un seul desdits matériaux.

De préférence, on compare la déformation ou le niveau de contrainte mesuré et la grandeur de référence à une courbe de référence donnant l'évolution normale de la déformation ou du niveau de contrainte de la structure en fonction de l'effort appliqué sur celle-ci.

La courbe de référence peut notamment être obtenue en mesurant préalablement l'évolution de la déformation ou du niveau de contrainte de ladite structure composite, à l'état neuf, en fonction de l'effort appliqué sur cette structure neuve.

Dans ce cas, on modélise avantageusement la courbe de référence par une équation du second degré. Cela simplifie le traitement puisque seules deux valeurs correspondant aux deux paramètres de l'équation sont alors mises en mémoire.

Afin de mesurer la déformation ou le niveau de contrainte de la partie de la structure formée d'un seul matériau, on utilise au moins un capteur, tel qu'une jauge extensiométrique ou tout autre capteur de déformation ou de contrainte, implanté sur ladite partie.

De façon comparable, on mesure avantageusement la déformation à l'interface au moyen d'au moins un capteur de déformation ou de contrainte, tel qu'une jauge extensiométrique ou un capteur piézoélectrique, implanté à l'interface de la structure composite.

Le procédé selon l'invention est avantageusement appliqué à la surveillance de l'état d'une structure composite dont les matériaux différents superposés comprennent une enveloppe métallique ou organique ou composite et un renfort de fibres longues noyées dans une matrice de résine.

Le capteur de déformation peut alors être intégré à la structure composite lors de la fabrication de celle-ci, avant de réaliser le renfort sur l'enveloppe.

Dans une application privilégiée du procédé, la structure composite forme un réservoir apte à contenir un fluide sous pression.

La partie de la structure formée d'un seul matériau est alors une cloison qui sépare une zone intérieure du réservoir, apte à contenir le fluide sous pression, d'un boîtier d'instrumentation, par exemple placé de préférence sur le fond du réservoir.

Afin d'effectuer une surveillance plus complète de la structure composite, on peut mesurer avantageusement au moins une autre grandeur choisie dans le groupe comprenant la température à l'interface de la structure, la température à proximité immédiate de la structure, la pression interne du réservoir, le niveau de chocs éventuels subis par le réservoir, le temps écoulé depuis un précédent contrôle, le temps écoulé depuis la mise en service du réservoir, les états "vide" et "plein" du réservoir et le nombre de remplissages de celui-ci.

Afin d'effectuer ces différentes mesures, on utilise des moyens de surveillance, tels que des capteurs et des circuits électroniques, implantés au moins en partie dans le boîtier d'instrumentation du réservoir.

L'invention a aussi pour objet un réservoir de fluide sous pression comprenant une paroi composite formée d'une enveloppe interne sur laquelle est déposée un renfort de fibres longues imprégnées de résine, superposés selon une interface donnée, caractérisé par le fait qu'au moins un capteur de déformation ou de contrainte est intégré à la paroi composite, à l'interface entre l'enveloppe et le renfort, pour permettre une surveillance de l'état de la paroi, par comparaison de la déformation ou de la contrainte mesurée par le capteur avec une grandeur de référence du niveau de contrainte ou de déformation de la paroi, normalement engendrée par la pression du fluide.

### Brève description des dessins

On décrira à présent, à titre d'exemple non limitatif, un mode de réalisation préféré de l'invention, en se référant aux dessins annexés dans lesquels :
- la figure 1 représente un réservoir de fluide sous haute pression équipé d'un dispositif conforme à l'invention, permettant d'assurer la surveillance de l'état de la structure composite formant la paroi du réservoir ; et
- la figure 2 est une vue en coupe agrandie qui représente une partie de la paroi circonférentielle du réservoir de la figure 1.

### Description détaillée d'un mode de réalisation préféré de l'invention

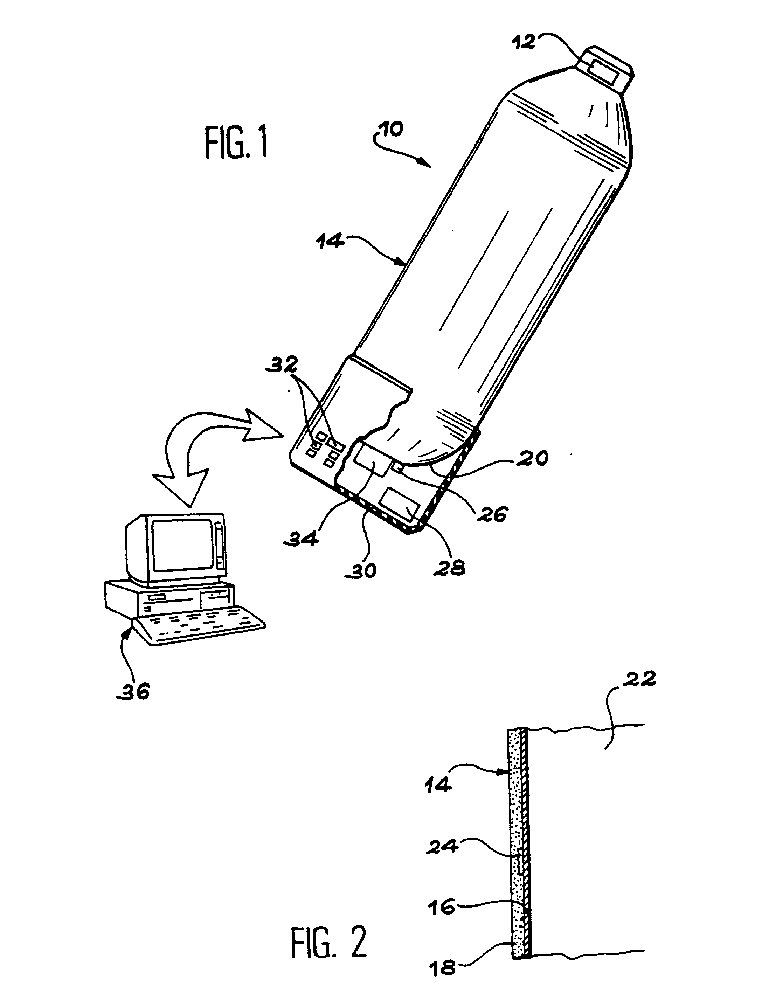

Sur la figure 1, la référence 10 désigne de façon générale un réservoir en forme de bouteille. Ce réservoir 10 est conçu pour contenir un fluide tel qu'un gaz sous pression. Plus précisément, il est destiné à être rempli et vidé un certain nombre de fois au cours du temps. A cet effet, il est équipé de moyens de raccordement et de fermeture illustrés schématiquement en 12.

Dans le mode de réalisation représenté où le réservoir 10 se présente sous la forme d'une bouteille cylindrique, les moyens de raccordement et de fermeture 12 sont implantés à l'extrémité haute de la bouteille.

Comme on l'a représenté sur la figure 2, la paroi 14 du réservoir 10 comprend une enveloppe métallique 16, recouverte d'un renfort 18 sur toute sa surface, à l'exception de l'extrémité du fond 20 du réservoir (figure 1). En variante, l'enveloppe métallique 16 peut être remplacée par une enveloppe organique ou composite.

Le renfort 18 est formé de fibres longues noyées dans une matrice de résine. Il est obtenu par enroulement filamentaire de fibres longues imprégnées de résine, soit de façon à former une simple frette autour de l'enveloppe 16, soit de façon multidirectionnelle. Lorsque l'enroulement filamentaire est terminé, le renfort 18 subit un cycle de polymérisation. A titre d'illustration nullement limitative, ce cycle de polymérisation peut consister à élever la température à 150°C environ pendant approximativement 3 h 30.

Lors de l'utilisation du réservoir 10, la structure composite formant la paroi 14 est soumise à un effort uniforme sur toute sa surface, du fait de la présence d'un gaz sous pression dans la zone intérieure 22 du réservoir.

Afin de surveiller l'état de fonctionnement et d'endommagement éventuel de la structure composite formant la paroi 14, le réservoir 10 est équipé, conformément à l'invention, de moyens de surveillance de cet état. Dans le mode de réalisation illustré, ces moyens de surveillance permettent également un certain nombre de mesures et de contrôles annexes, comme cela apparaîtra dans la description détaillée qui va en être faite.

Ainsi, les moyens de surveillance qui équipent le réservoir 10 comprennent un ou plusieurs capteurs de déformation ou de contrainte 24 (figure 2), tels que des jauges extensiométriques et/ou des capteurs de déformation ou de contrainte, implantés dans la paroi 14 du réservoir 10, à l'interface entre l'enveloppe 16 et le renfort 18. Les capteurs 24 sont intégrés à la paroi 14 lors de la fabrication de celle-ci. A cet effet, ils sont placés sur l'enveloppe 16 avant l'étape de bobinage au cours de laquelle est mis en place le renfort 18.

De façon plus précise, les capteurs 24 sont intégrés dans la partie circonférentielle de la paroi 14, appelée à subir les déformations ou les contraintes les plus importantes lorsque la pression varie dans la zone intérieure 22 du réservoir 10. Ils mesurent ainsi en permanence la déformation ou le niveau de la contrainte de la paroi 14 engendrée par la pression qui règne dans le réservoir 10. La déformation ou le niveau de contrainte mesuré par le capteur 24 a aussi en partie pour origine la dégradation du matériau composite formant la paroi 14, lorsqu'une telle dégradation existe.

La différence mesurée entre le capteur 24 et la grandeur de référence permet de connaître l'état de fonctionnement de la paroi 14.

Afin d'effectuer cette comparaison, on équipe également le réservoir 10 d'au moins un autre capteur de déformation ou de contrainte 26, tel qu'une jauge extensiométrique ou un capteur piézoélectrique, placé sur le fond 20 du réservoir 10, c'est-à-dire sur une partie de la paroi 14 dans laquelle l'enveloppe 16 est dépourvue du renfort 18. Du fait de l'absence de renfort 18 dans le fond 20, les déformations de celui-ci, détectées par le capteur 26, ne sont pas modifiées par un éventuel endommagement de la structure composite 16. En d'autres termes, le capteur 26 mesure une grandeur parfaitement représentative du niveau de la pression qui règne à l'intérieur du réservoir 10. Une comparaison des signaux délivrés par les capteurs 24 et 26 permet donc de détecter la part de la déformation de la paroi 14, mesurée par les capteurs 24, due uniquement à l'endommagement de la structure composite de la paroi.

Pour effectuer cette comparaison, on équipe également le réservoir 10 de moyens de surveillance de l'état de ce réservoir, implantés sur une carte électronique 28, elle-même montée dans un boîtier d'instrumentation 30 qui fait partie intégrante du réservoir 10. Plus précisément, le boîtier d'instrumentation 30 est fixé de façon étanche sur la paroi 14 du réservoir 10, de façon à recouvrir en totalité le fond 20 de celui-ci. Le capteur de déformation 26 est donc également placé à l'intérieur du boîtier d'instrumentation 30.

De façon plus précise, la carte électronique 28 est dotée d'une mémoire dans laquelle est enregistrée une courbe de référence donnant l'évolution normale de la grandeur ou déformation de la structure composite formant la paroi 14 du réservoir, en fonction de l'effort appliqué sur cette structure, du fait de la pression interne. Cette courbe de référence est obtenue expérimentalement sur le réservoir à l'état neuf, en mesurant l'évolution de la déformation de la structure composite en fonction de la pression interne du réservoir, c'est-à-dire en fonction de l'effort appliqué sur la structure composite.

La carte électronique 28 est également dotée d'un circuit de traitement des signaux de sortie délivré par les capteurs 24 et 26. Ce circuit vérifie en permanence que les signaux délivrés par les capteurs évoluent toujours suivant la fonction de référence mémorisée. Lorsque les signaux n'évoluent plus suivant la courbe de référence, l'événement est pris en compte et traité. Ce traitement peut notamment inclure une mise en mémoire de cet événement (date et valeur extrême atteinte) et le déclenchement d'un indicateur d'alarme 32 placé sur le boîtier 30 et visible de l'extérieur ou transmettre à un système externe.

Dans le mode de réalisation préféré représenté, les moyens de surveillance associés au réservoir 10 permettent en outre de surveiller les autres grandeurs suivantes :
- température au sein de la structure composite ;
- température dans l'environnement immédiat du réservoir ;
- états "vide" et "plein" du réservoir ;
- non dépassement d'une pression critique ;
- nombre de remplissages du réservoir ;
- niveau de chocs et direction éventuels subis par le réservoir ;
- temps écoulé depuis un contrôle périodique
- temps écoulé depuis la mise en service du réservoir.

Pour mesurer la température dans la structure composite formant la paroi 14, on peut implanter un ou plusieurs capteurs de température (non représentés) tels qu'une thermistance, un thermocouple, ou autre, à l'interface entre l'enveloppe 16 et le renfort 18. Ces capteurs de température sont alors mis en place lors de la fabrication de la structure composite formant la paroi 14, de la même manière que les capteurs 24.

Il est à noter que tous les capteurs intégrés dans la paroi 14 sont choisis de façon à pouvoir supporter le cycle de fabrication du renfort 18 formant la partie extérieure de la paroi 14.

Un autre capteur de température (non représenté) tel qu'une thermistance, un thermocouple, ou autre, est monté dans le boîtier d'instrumentation 30, pour mesurer la température dans l'environnement immédiat de la bouteille. Dans un certain nombre d'applications, ce dernier capteur de température peut être considéré comme suffisant. Les capteurs de température intégrés à la structure composite formant la paroi 14 sont alors omis.

L'un des circuits équipant la carte électronique autonome 28 compare alors la ou les températures mesurées par les capteurs de température à deux seuils de température prédéfinis, respectivement haut et bas, qui délimitent la plage d'utilisation autorisée du réservoir 10. La comparaison est effectuée en permanence. Dès que l'un des seuils est franchi, l'événement est pris en compte et traité, c'est-à-dire par exemple mémorisé et transmis à un indicateur d'alarme 32.

Il est à noter que les températures mesurées par le ou les capteurs de température implantés sur le réservoir 10 peuvent aussi être utilisées pour corriger les autres grandeurs mesurées par les moyens de surveillance équipant ce réservoir.

Les signaux délivrés par les capteurs 24 et 26 sont également utilisés pour détecter les états "vide" et "plein" du réservoir, ainsi que le non dépassement d'une pression critique.

Ainsi, les états "vide" et "plein" du réservoir sont repérés dans la carte électronique 28 par le franchissement de deux seuils de pression "haut" et "bas" prédéfinis. Un compteur (non représenté) logé dans le boîtier d'instrumentation 30, est incrémenté chaque fois que la pression interne du réservoir 10 franchit successivement le seuil "bas" puis le seuil "haut". Au-delà d'un nombre de remplissages prédéfini, l'événement est pris en compte et traité, par exemple par une mise en mémoire et un affichage sur un indicateur 32 du boîtier d'instrumentation 30.

La détection du seuil de pression "haut", couplée avec une horloge interne (non représentée), telle qu'une horloge électronique implantée dans le boîtier d'instrumentation 30, est également utilisée pour déterminer la durée effective de fonctionnement à l'état "plein" du réservoir 10.

Un dispositif analogue au précédent permet de s'assurer que la pression interne ne dépasse pas une pression critique prédéfinie. En cas de dépassement de ce seuil, l'événement est pris en compte et traité.

Un accéléromètre 34, tel qu'un capteur de chocs tridimensionnel ou trois capteurs de chocs simples, fixé sur le fond 20 du réservoir 10, est utilisé pour mesurer les niveaux de chocs et directions éventuellement encaissés par le réservoir. Les valeurs obtenues sont comparées à des valeurs maximales prédéfinies dans un circuit prévu à cet effet sur la carte électronique autonome 28. La valeur des seuils admissibles est à priori dépendante de la direction, car l'amortissement du choc dépend de la zone heurtée. Si l'un des seuils est atteint, l'événement est pris en compte et traité.

L'horloge interne logée dans le boîtier d'instrumentation 30 décompte le temps qui s'écoule depuis le dernier contrôle périodique et le compare à une durée maximale autorisée. Lors de chaque contrôle, le compteur périodique est remis à zéro. Quand la durée maximale est dépassée, l'événement est pris en compte et traité.

L'horloge interne calcule également la durée d'utilisation du réservoir 10 depuis sa mise en service, sans possibilité de remise à zéro. Le compteur transmet donc le temps qui s'est écoulé depuis la fin de la fabrication du réservoir. Quand la durée de vie autorisée est dépassée, l'événement est pris en compte et traité.

Il est à noter que toutes les valeurs prédéfinies qui caractérisent les moyens de surveillance dont la description vient d'être faite peuvent être réglées au moment de la mise en service du réservoir.

Comme on l'a illustré très schématiquement sur la figure 1, les moyens de surveillance qui équipent le réservoir 10 peuvent être programmés et exploités, en dehors des indicateurs d'alarme 32 qui assurent une information en temps réel, par le raccordement de la carte électronique 28 sur un système d'exploitation externe par exemple un ordinateur externe 36. Ce raccordement peut être permanent ou effectué lors de contrôles périodiques du réservoir, ainsi qu'avant sa mise en service.

Il est à noter que les moyens de surveillance de l'état de dégradation de la structure composite formant la paroi 14, ainsi que le procédé de surveillance correspondant, ne sont pas limités à l'application décrite, c'est-à-dire au cas où la structure composite forme la paroi d'un réservoir contenant un fluide sous pression. Au contraire, le procédé et le dispositif peuvent être utilisés pour effectuer la surveillance de toute structure composite soumise à un effort global uniforme et constituée d'au moins deux matériaux différents présentant une interface.

Par ailleurs, dans le cas où le procédé selon l'invention est appliqué à un réservoir, les moyens de surveillance peuvent avoir pour seule fonction la surveillance de l'état de dégradation du composite, sans sortir du cadre de l'invention.

## Revendications

1. Procédé de surveillance de l'état d'une structure composite (14) formée d'au moins deux matériaux différents (16,18) superposés selon une interface donnée et soumise à un effort uniforme sur toute sa surface, comprenant les étapes suivantes :
- mesure d'une déformation ou d'un niveau de contrainte de la structure (14) engendrée par ledit effort, à l' interface ;
- comparaison de la déformation ou du niveau de contrainte mesuré avec une grandeur de référence de la structure, normalement engendrée par ledit effort.

2. Procédé selon la revendication 1, dans lequel on détermine la grandeur de référence en mesurant la déformation ou le niveau de contrainte d'une partie (20) de la structure, formée d'un seul desdits matériaux.

3. Procédé selon l'une quelconque des revendications 1 et 2, dans lequel on compare la déformation ou le niveau de contrainte mesuré et la grandeur de référence à une courbe de référence donnant l'évolution normale de la déformation ou du niveau de contrainte de la structure (14) en fonction de l'effort appliqué sur celle-ci.

4. Procédé selon la revendication 3, dans lequel on obtient la courbe de référence en mesurant préalablement l'évolution de la déformation ou du niveau de contrainte de ladite structure composite, à l'état neuf, en fonction de l'effort appliqué sur cette structure neuve.

5. Procédé selon l'une quelconque des revendications 3 et 4, dans lequel on modélise la courbe de référence par une équation du second degré.

6. Procédé selon l'une quelconque des revendications 2 à 5, dans lequel on mesure la déformation ou le niveau de contrainte de ladite partie (20) de la structure au moyen d'au moins un premier capteur (26) implanté sur ladite partie.

7. Procédé selon l'une quelconque des revendications précédentes, dans lequel on mesure la déformation ou le niveau de contrainte de la structure (14) au moyen d'au moins un deuxième capteur (24) implanté à l'interface de ladite structure composite.

8. Procédé selon l'une quelconque des revendications précédentes, appliqué à la surveillance de l'état d'une structure composite (14) dont les matériaux différents superposés comprennent une enveloppe (16) et un renfort (18) de fibres longues noyées dans une matrice de résine.

9. Procédé selon les revendications 7 et 8 combinées, dans lequel on intègre le deuxième capteur (24) à la structure composite (14) lors de la fabrication de celle-ci, avant de réaliser le renfort (18) sur l'enveloppe (16).

10. Procédé selon l'une quelconque des revendications précédentes, dans lequel la structure composite (14) forme un réservoir (10) apte à contenir un fluide sous pression.

11. Procédé selon la revendication 10, dans lequel ladite partie de la structure est une cloison (20) séparant une zone intérieure (22) du réservoir (10) apte à contenir le fluide sous pression, d'un boîtier d'instrumentation (30).

12. Procédé selon la revendication 11, dans lequel le boîtier d'instrumentation (30) est placé sur le fond du réservoir (10).

13. Procédé selon l'une quelconque des revendications 11 et 12, dans lequel on mesure au moins une autre grandeur choisie dans le groupe comprenant la température à l'interface de la structure, la température à proximité immédiate de la structure, la pression interne du réservoir (10), le niveau de chocs éventuels subis par le réservoir (10), le temps écoulé depuis un précédent contrôle, le temps écoulé depuis la mise en service du réservoir (10), les états "vide" et "plein" du réservoir (10) et le nombre de remplissages de celui-ci.

14. Procédé selon la revendication 13, dans lequel on effectue lesdites mesures à l'aide de moyens de surveillance (28) implantés au moins en partie dans le boîtier d'instrumentation (30).

15. Réservoir de fluide sous pression comprenant une paroi composite (14) formée d'une enveloppe (16) et d'un renfort (18) de fibres longues imprégnées de résine, superposés selon une interface donnée, **caractérisé par le fait qu'**au moins un premier capteur (24) est intégré à la paroi composite, à l'interface entre l'enveloppe (16) et le renfort (18), pour permettre une surveillance de l'état de la paroi, par comparaison de la déformation ou du niveau de contrainte mesuré par le premier capteur (24) avec une grandeur de référence de la paroi, normalement engendrée par la pression du fluide.

16. Réservoir selon la revendication 15, dans lequel au moins un deuxième capteur (26) est implanté sur une cloison (20) du réservoir, dépourvue de renfort, pour mesurer la déformation ou le niveau de contrainte de ladite cloison (20).

17. Réservoir selon la revendication 16, dans lequel ladite cloison (20) sépare une zone intérieure (22) du réservoir, apte à contenir le fluide, d'un boîtier d'instrumentation (30).

18. Réservoir selon la revendication 17, dans lequel ladite cloison (20) forme le fond du réservoir.

19. Réservoir selon l'une quelconque des revendications 17 et 18, dans lequel le boîtier d'instrumentation (30) contient des moyens de surveillance (28) de l'état du réservoir, reliés au premier capteur (24) et au deuxième capteur (26).

## Patentansprüche

1. Verfahren zur Überwachung des Zustands einer Verbundstruktur (14), die aus mindestens zwei unterschiedlichen Materialien (16,18) gebildet ist, welche entlang einer gegebenen Grenzfläche übereinandergeschichtet sind und einer gleichmäßigen Belastungskraft auf ihre gesamte Oberfläche ausgesetzt sind, die folgenden Schritte umfassend:
- Messen einer von der Belastungskraft erzeugten Verformung oder eines Belastungsniveaus der Struktur 14 an der Grenzfläche,
- Vergleichen der Verformung oder des gemessenen Belastungsniveaus mit einer Bezugsgröße der Struktur, die normalerweise durch die Belastungskraft erzeugt wird.

2. Verfahren nach Anspruch 1, wobei die Bezugsgröße bestimmt wird, indem die Verformung oder das Belastungsniveau eines Abschnitts (20) der Struktur, der aus einem einzigen der Materialien gebildet ist, gemessen wird.

3. Verfahren nach einem der Ansprüche 1 oder 2, wobei die Verformung oder das gemessene Belastungsniveau sowie die Bezugsgröße mit einer Bezugskurve verglichen wird, welche die normale Entwicklung der Verformung oder des Belastungsniveaus der Struktur (14) als Funktion der auf sie einwirkenden Belastungskraft angibt.

4. Verfahren nach Anspruch 3, wobei die Bezugskurve erhalten wird, indem vorab die Entwicklung der Verformung oder des Belastungsniveaus der Verbundstruktur im neuen Zustand als Funktion der auf diese neue Struktur einwirkenden Belastungskraft gemessen wird.

5. Verfahren nach einem der Ansprüche 3 oder 4, wobei die Bezugskurve durch eine Gleichung zweiten Grades modelliert wird.

6. Verfahren nach einem der Ansprüche 2 bis 5, wobei die Verformung oder das Belastungsniveau des Abschnitts (20) der Struktur mittels mindestens einem ersten an dem Abschnitt angebrachten Messfühler (26) gemessen wird.

7. Verfahren nach einem der vorangehenden Ansprüche, wobei die Verformung oder das Belastungsniveau der Struktur (14) mittels mindestens einem zweiten Messfühler (24) gemessen wird, der an der Grenzfläche bzw. Grenzfläche der Verbundstruktur angebracht ist.

8. Verfahren nach einem der vorangehenden Ansprüche, angewandt auf die Überwachung des Zustands einer Verbundstruktur (14), deren verschiedene übereinandergeschichtete Materialien eine Umhüllung (16) und eine Verstärkung (18) aus in einer Harzmatrix getränkten bzw. eingebetteten langen Fasern umfassen.

9. Verfahren nach einem der Ansprüche 7 oder 8 in Kombination, wobei der zweite Messfühler (24) der Verbundstruktur (14) bei deren Herstellung vor der Anfertigung der Verstärkung (18) an der Umhüllung (16) integriert wird.

10. Verfahren nach einem der vorangehenden Ansprüche, wobei die Verbundstruktur (14) einen Behälter (10) bildet, der ein druckbeaufschlagtes Fluid aufzunehmen vermag.

11. Verfahren nach Anspruch 10, wobei der Abschnitt der Struktur eine Trennwand (20) ist, welche eine innere Zone (22) des Behälters (10), der das druckbeaufschlagte Fluid aufzunehmen vermag, von einem Instrumentenkasten (30) trennt.

12. Verfahren nach Anspruch 11, wobei der Instrumentenkasten (30) an der Unterseite des Behälters (10) angebracht ist.

13. Verfahren nach einem der Ansprüche 11 oder 12, wobei mindestens eine weitere Größe gemessen wird, die aus der Gruppe ausgewählt wird, welche umfasst: die Temperatur an der Grenzfläche bzw. Grenzfläche der Struktur, die Temperatur in unmittelbarer Nähe der Struktur, der Innendruck des Behälters (10), das Niveau von eventuell von dem Reservoir (10) erfahrenen Stößen, die seit einer vorausgehenden Kontrolle verstrichene Zeit, die seit der Inbetriebnahme des Behälters (10) verstrichene Zeit, die Zustände "leer" und "voll" des Behälters (10) sowie die Anzahl von Füllungen desselben.

14. Verfahren nach Anspruch 13, wobei die Messungen mittels Überwachungsmitteln (28) ausgeführt werden, welche mindestens teilweise in dem Instrumentenkasten (30) angebracht sind.

15. Behälter für druckbeaufschlagtes Fluid mit einer Verbundwand (14), die aus einer Umhüllung (16) und einer Verstärkung (18) aus langen, in Harz getränkten bzw. eingebetteten Fasern gebildet ist, welche entlang einer gegebenen Grenzfläche bzw. Grenzfläche übereinandergeschichtet sind, **dadurch gekennzeichnet, dass** mindestens ein erster Messfühler (24) in die Verbundwand an der Grenzfläche zwischen der Umhüllung (16) und der Verstärkung (18) integriert ist, um eine Überwachung des Zustandes der Wand durch Vergleichen der Verformung oder des gemessenen Belastungsniveaus durch den ersten Messfühler (24) mit einer Bezugsgröße der Wand, die normalerweise durch den Druck des Fluids erzeugt wird, zu ermöglichen.

16. Behälter nach Anspruch 15, wobei mindestens ein zweiter Messfühler (26) an einer Trennwand (20) des Behälters ohne Verstärkung angebracht ist, um die Verformung oder das Belastungsniveau der Trennwand (20) zu messen.

17. Behälter nach Anspruch 16, wobei die Trennwand (20) eine Innenzone (22) des Behälters, der das Fluid aufzunehmen vermag, von einem Instrumentenkasten (30) trennt.

18. Behälter nach Anspruch 17, wobei die Trennwand (20) die Unterseite des Behälters bildet.

19. Behälter nach einem der Ansprüche 17 oder 18, wobei der Instrumentenkasten (30) Überwachungsmittel (28) des Zustands des Behälters, welche mit dem ersten Messfühler (24) und dem zweiten Messfühler (26) verbunden sind, enthält.

## Claims

1. Method for monitoring the state of a composite structure (14) formed from at least two different materials (16, 18) superimposed along a given interface and subject to a uniform force over its entire surface, comprising the following stages:
- measurement of a deformation or stress level of the structure (14) produced by said force at the interface,
- comparison of the deformation or stress level measured with a reference quantity of the structure, normally produced by said force.

2. Method according to claim 1, wherein the reference quantity is determined by measuring the deformation or stress level of part (20) of the structure formed from only one of said materials.

3. Method according to either of the claims 1 and 2, wherein the measured stress level or deformation and the reference quantity are compared with a reference curve giving the normal evolution of the deformation or stress level of the structure (14) as a function of the force applied thereto.

4. Method according to claim 3, wherein the reference curve is obtained by measuring beforehand the evolution of the deformation or stress level of said composite structure, in the new state, as a function of the force applied to said new structure.

5. Method according to either of the claims 3 and 4, wherein the reference curve is modelled by a second degree equation.

6. Method according to any one of the claims 2 to 5, wherein the deformation or stress level of said part (20) of the structure is measured by at least one first transducer (26) installed on said part.

7. Method according to any one of the preceding claims, wherein the deformation or stress level of the structure (14) is measured by at least one second transducer (24) installed at the interface of said composite structure.

8. Method according to any one of the preceding claims, applied to the monitoring of the state of a composite structure (14), whose different, superimposed materials comprise an envelope (16) and a reinforcement (18) of long fibres embedded in a resin matrix.

9. Method according to either of the claims 7 and 8, wherein the second transducer (24) is integrated into the composite structure (14) during the manufacture of the latter prior to producing the reinforcement (18) on the envelope (16).

10. Method according to any one of the preceding claims, wherein the composite structure (14) forms a reservoir (10) able to contain a pressurized fluid.

11. Method according to claim 10, wherein said part of the structure is a partition (20) separating an internal area (22) of the reservoir (10) able to contain the pressurized fluid from an instrumentation box (30).

12. Method according to claim 11, wherein the instrumentation box (30) is placed on the bottom of the reservoir (10).

13. Method according to either of the claims 11 and 12, wherein at least one other quantity chosen from within the group including the temperature at the interface of the structure, the temperature in the immediate vicinity of the structure, the internal pressure of the reservoir (10), the possible shock levels suffered by the reservoir (10), the time which has elapsed since a previous inspection, the time which has elapsed since the reservoir (10) has entered service, the "empty" and "full" states of the reservoir (10) and the number of fillings thereof is measured.

14. Method according to claim 13, wherein said measurements are carried out with the aid of monitoring means (28) at least partly installed in the instrumentation box (30).

15. Pressurized fluid reservoir comprising a composite wall (14) formed from an envelope (16) and a reinforcement (18) of long, resin-impregnated fibres superimposed along a given interface, **characterized in that** at least one first transducer (24) is integrated into the composite wall, at the interface between the envelope (16) and the reinforcement (18), so as to permit the monitoring of the state of the wall, by comparing the stress level or deformation measured by the first transducer (24) with a reference quantity of the wall, normally produced by the pressure of the fluid.

16. Reservoir according to claim 15, wherein at least one second transducer (26) is installed on a partition (20) of the reservoir, which is free from any reinforcement, in order to measure the deformation or stress level of said partition (20).

17. Reservoir according to claim 16, wherein said partition (20) separates an internal area (22) of the reservoir able to contain the fluid from an instrumentation box (30).

18. Reservoir according to claim 17, wherein said partition (20) forms the bottom of the reservoir.

19. Reservoir according to either of the claims 17 and 18, wherein the instrumentation box (30) contains the means (28) for monitoring the state of the reservoir, connected to the first transducer (24) and to the second transducer (26).
